# EUROPÄISCHE PATENTSCHRIFT

(11) **EP 3 527 601 B1**
(45) Veröffentlichungstag und Bekanntmachung des Hinweises auf die Patenterteilung: **14.07.2021**
(21) Anmeldenummer: 19000046.3
(22) Anmeldetag: 28.01.2019
(51) Int. Cl.: C08G 18/76, B65D 83/68, C08J 9/12, C08L 75/04, C08G 18/48

(54) **AEROSOLDOSENANORDNUNG**
AEROSOL CAN ASSEMBLY
SYSTÈME DE BOMBE AÉROSOL

(30) Priorität: 16.02.2018 DE 102018001221
(43) Veröffentlichungstag der Anmeldung: 21.08.2019
(73) Patentinhaber: Colux GmbH, 78224 Singen (DE)
(72) Erfinder: LECHNER, Roland, 78224 Singen (DE)
(74) Vertreter: Hering, Hartmut

(56) Entgegenhaltungen:
- EP-A1- 0 953 625
- DE-U1-202009 013 510
- US-A- 3 882 684
- US-A1- 2015 259 496

## Beschreibung

Die Erfindung betrifft eine Aerosoldosenanordnung, mit einer druckfesten Aussendose und zumindest einem Innenbehälter, wobei in der Aussendose zumindest eine erste Komponente zusammen mit zumindest einem Treibgas und in dem Innenbehälter zumindest eine weitere Komponente zusammen mit zumindest einem Treibgas aufgenommen ist, welche Komponenten beim oder nach dem Austragen einen Schaum erzeugen (bilden), der nach der Aushärtung formstabil und wasserdicht ist.

Gattungsgemässe Aerosoldosenanordnungen werden schon bis anhin zur Erzeugung eines aus zumindest zwei Komponenten bestehenden Schaums eingesetzt. Allerdings eignen sich die bisherigen Schäume nicht oder nur bedingt zur Erzeugung eines Schaums, mittels welchem Rohre und dergleichen hydraulisch abgedichtet werden können.

Aus der EP 0 111 089 ist eine gattungsgemässe 2K-Aerosoldose bekannt, die mit zwei unabhängigen, mit unterschiedlichen Komponenten gefüllten Kammern versehen ist. Die erste Kammer wird durch die eigentliche Hauptdose gebildet, in welcher die erste Komponente in vorzugsweise flüssiger Form aufgenommen ist. Die zweite Kammer wird durch einen Innenbehälter gebildet, in dem die zweite, die Aushärtung des ausgetragenen Schaums beschleunigende Komponente eingefüllt ist. Diese zweite Komponente ist vorzugsweise ebenfalls flüssig. Jede Kammer der Aerosoldose ist mit einem verschließbaren, nach außen führenden Ausfließkanal verbunden.

Eine solche Dose hat den Vorteil, dass die beiden Komponenten erst nach dem Austritt aus der Aussendose bzw. dem Innenbehälter gemischt werden, so dass die Dose mehrmals in zeitlichen Abständen verwendet werden kann.

Zur Erzeugung eines Schaums, der nach dem Aushärten formstabil und grundsätzlich wasserdicht ist, wird in die Aussendose beispielsweise ein Prepolymer, das aus der Reaktion von Isocyanat, meistens Diphenylmethan-4,4'-diisocyanat und Polyol entstanden ist, gefüllt. Zusätzlich befinden sich Flammschutzmittel, Hilfsstoffe und verflüssigte Treibgase wie beispielsweise Propan-Butan 4.2 (PB4.2) und Dimethylether (DME) in der Formulierung. Im Innenbehälter ist üblicherweise ein die Aushärtung der Hauptkomponente -Prepolymer- initiierender und/oder beschleunigender Härter oder Katalysator zusammen mit einem verflüssigten Treibgas aufgenommen, wobei der Härter bzw. Katalysator vorzugsweise ebenfalls in verflüssigter Form vorliegt.

Obwohl sich ein mit einer gattungsgemässen Aerosoldosenanordnung erzeugter Schaum für verschiedene Anwendungsbereiche eignet, konnte damit bisher kein Schaum erzeugt werden, der es ermöglicht, einen Hohlkörper wie beispielsweise ein Rohr so damit auszuschäumen, dass eine zuverlässige hydraulische Abdichtung erreicht wird. Obwohl auch schon mit den bisherigen Aerosoldosenanordnungen Schäume erzeugt werden konnten, welche überwiegend geschlossene Poren besitzen und daher an und für sich wasserdicht waren, gelang es bis anhin nicht, mit einem solchen Schaum grosse Wasser-Rohre mit einem Innendurchmesser von über 100 mm, insbesondere von über 150 mm auszufüllen und langzeitstabil abzudichten.

Bei Tests hat sich nämlich gezeigt, dass der mit einer herkömmlichen Aerosoldosenanordnung erzeugte Schaum, welcher üblicherweise/vorzugsweise durch Trimerisierung aushärtet, kein zuverlässiges Abdichten von Hohlkörpern, insbesondere von Rohren mit einem Innendurchmesser über 100 Millimetern, ermöglicht. An der Grenzfläche von Schaum zu Rohrinnenwand entsteht eine löcherige Schicht durch die das Wasser durchdringen kann. Der Grund ist im Härtungsmechanismus zu finden. Wenn man ein Prepolymer durch Trimerisierung härtet, braucht diese eine Starttemperatur von 80°C. Im Inneren des Schaums wird diese Temperatur leicht erreicht. An der kalten Rohrwand bricht die Trimerisierung jedoch ab und darum entsteht die löcherige Grenzfläche. In der Praxis hat sich gezeigt, dass der vorhandene Schaum sich daher nicht eignet, um Rohre abzudichten.

Aus der DE 20 2009 013 510 U1 ist ein Druckbehälter in der Form einer 2K-Aerosoldose bekannt, die mit zwei unabhängigen, mit unterschiedlichen Komponenten gefüllten Kammern versehen ist. Die erste Kammer wird durch die eigentliche Hauptdose gebildet, in welcher die erste Komponente in vorzugsweise flüssiger Form aufgenommen ist. Die zweite Kammer wird durch einen Innenbehälter gebildet, in dem die zweite, die Aushärtung des ausgetragenen Schaums beschleunigende Komponente eingefüllt ist. Diese zweite Komponente ist vorzugsweise ebenfalls flüssig. Jede Kammer der Aerosoldose ist mit einem verschließbaren, nach außen führenden Ausfließkanal verbunden. In der Hauptkammer sind 100-300 Gramm Diphenylmethan-4,4'-diisocyanat, 50-100 Gramm Polyol, 50-100 Gramm Flammschutzmittel, 1-5 Gramm Schaumstabilisator, 0,1-2 Gramm Katalysator zur Bildung des Prepolymers, 10-50 Gramm Propan-Butan 4.2 und 10-50 Gramm DME aufgenommen, während in der der Innenkammer 5-30 Gramm Polyol, 5-30 Gramm Trimerisations-Aminkatalysator, 5-30 Gramm Trimerisations-Co-Katalysator, 0,1-1 Gramm Farbstoff und 2-10 Gramm Difluorethan (R152a) aufgenommen sind. Das Endprodukt ist PU-Montageschaum.

Die EP 0 963 625 A1 offenbart eine Zweikammer-Aerosoldose mit einem gemeinsamen Auslass für zwei darin aufgenommene Komponenten. In der grösseren Aussendose ist ein modifiziertes Isocyanurat mit einem Füllstoff aufgenommen, während in der kleineren Innendose ein Katalysator aufgenommen ist. Eine Rezeptur sieht vor, dass die Aussendose 48g Isocyanat und 20 g 1,1,1,2 Tetrafluorethan enthält, während die Innendose 10,6 g Polyol und 4g R134a enthält. Auch kann in die Kammer für modifiziertes Isocyanurat und Füllstoff Stahlkugeln eingelegt sein. Eine solche Aerosoldose wird zur Handhabung eines feuerhemmend ausgerüsteten Montageschaums eingesetzt.

In der US 3 882 684 A ist eine Zweikammerpatrone zur Verfestigung von Gestein oder Kohle offenbart. Die eine Kammer der Patrone enthält ein Diphenylmethan-diisocyanat', während die andere Kammer eine Polyolkomponente mit einer OH-Zahl von 200 - 400 und 10 - 20 % eines Elastifizierungsmittels sowie 0,3 - 5 % Wasser enthält. Zum Verfestigen des Gesteins/Kohle wird die Patrone in ein Bohrloch eingeführt und darin mechanisch zerstört, so dass deren Inhaltsstoffe austreten und aufschäumen. Der Vorteil des ausgebrachten Diphenylmethan-diisocyanat' soll darin liegen, dass seine hautschädigende Wirkung wesentlich geringer ist, als die des üblicherweise verwendeten Toluidendiisocyanats.

Schliesslich beschreibt die US 2015259496 A1 ein Verfahren zur Herstellung von Polyurethanschaum unter Verwendung eines emulgierten Treibmittels. Der mit dem beschriebenen Verfahren hergestellte Polyurethanschaum soll sich in besonderer Weise zum Isolieren von Baukörpern, namentlich Kühlschrank-Isolierrahmen, eignen.

Die Aufgabe der Erfindung besteht nun darin, eine Aerosoldosenanordnung vorzuschlagen, deren Füllung beim Austragen einen Schaum bildet, der sich zum Abdichten von Hohlkörpern wie Rohren eignet, insbesondere von Rohren mit einem Innendurchmesser von mehr als 100 mm, wobei der Schaum nach der Härtung wasserdicht sein soll und einen hydraulischen Druck von mindestens 0,1 bar aushalten können soll.

Die Lösung der Aufgabe ist durch die Merkmale des Anspruchs 1 definiert. Indem bei der Aerosoldosenanordnung in der Aussendose zumindest jeweils 30 bis 70 Gewichts-% (Gew.-%) Isocyanat, insbesondere Diphenylmethan-4,4'-diisocyanat, 5 bis 30 Gew.-% Flüssiggas mit einer kritischen Temperatur von ≥ +70°C, *3 bis 15 Gew.-% Polyol mit einer OH-Zahl unter 300 sowie 10 bis 20 Gew.-% Flammschutzmittel aufgenommen sind,* und in dem Innenbehälter (3) zumindest jeweils 5 bis 30 Gew.-% Polyol mit einer OH-Zahl größer 300, 1 bis 10 Gew.-% Flüssiggas mit einer kritischen Temperatur von ≥ +70°C *sowie zusätzlich 0,5 bis 3 Gew.-% Katalysator für Urethanreaktion sowie 0,5 bis 3 Gew.-% Trimerisierungskatalysator* aufgenommen sind, wird die grundsätzliche Voraussetzung zur Erzeugung eines wasserdichten Schaums geschaffen, mittels welchem Rohre zuverlässig und langzeitstabil abgedichtet werden können und auch einem hydraulischen Druck von 0,1 bar standhalten. Der Begriff Aerosoldosenanordnung bezieht sich hier auf die Aerosoldose zusammen mit den darin aufgenommenen Wirkstoffkomponenten.

Bevorzugte Ausführungsformen und Weiterbildungen der Aerosoldosenanordnung sind in den abhängigen Ansprüchen 2 bis 10 umschrieben.

Eine besonders bevorzugte Weiterbildung sieht vor, dass als Flammschutzmittel Tris(1-chlor-2-propyl)phosphat in der Aussendose aufgenommen ist. Dieses handelsübliche Flammschutzmittel ist kostengünstig.

Bevorzugt sind in der Aussendose zusätzlich 0,1 bis 1 Gew.-% Katalysator für die Prepolymerreaktion (PPR). Dies ergibt den Vorteil, dass die PPR nach einem Tag abgelaufen ist. Vorzugsweise ist als Katalysator das handelsübliche und kostengünstige 2,2'-dimorpholinodiethylether in der Aussendose aufgenommen.

Bevorzugt sind in der Innendose zusätzlich 0,1 bis 3 Gew.-% Farbstoff aufgenommen. Dies hat den Vorteil, dass der Anwender beim Aussprühen des Schaums eine optische Mischkontrolle hat.

Besonders bevorzugt ist als Flüssiggas in der Aussendose 5 bis 30 Gew.% R152a, Propan-Butan-Gemisch und/oder DME aufgenommen. Ein solches Flüssiggas bewirkt, dass die Komponenten aus den Dosenkammern ausgetrieben werden und dass sich Schaum bildet.

Vorzugsweise ist als Schaumstabilisator in der Aussendose Polyether-Polydimethylsiloxan-Copolymer aufgenommen, was den Vorteil mit sich bringt, dass der Schaum nicht zerläuft.

Als Flüssiggas in dem Innenbehälter sind vorzugsweise 1 bis 10 Gew.% R152a und/oder DME und/oder Propan-Butan-Gemische aufgenommen. Diese bewirken das Ausbringen der Wirkstoffe und dass sich Schaum bildet.

Indem in dem Innenbehälter zumindest 15 Gew.-Anteile Polyol mit einer OH-Zahl größer 300 pro 100 Gew.-Anteile Isocyanat oder Diphenylmethan-4,4'-diisocyanat aufgenommen ist, kann erreicht werden, dass eine Urethanreaktion abläuft, die auch an einer kalten Rohrwand statt findet.

Eine bevorzugte Weiterbildung der Aerosoldosenanordnung sieht vor, dass das nutzbare Volumen des Innenbehälters zumindest 20% des nutzbaren Volumens des Aussenbehälters beträgt. Dadurch können Mischungsverhältnisse von 5 zu 1 erreicht werden, also dass z.B. auf 100 g Prepolymer in der Außendose 20 g Härter- oder Polyolkomponente im Innenbehälter aufgenommen werden.

Besonders bevorzugt ist der Innenbehälter form- und druckstabil ausgebildet. Neben Sicherheitsaspekten hat diese Ausbildung den Vorteil, dass der Innenbehälter schon vor dem Einsetzen in die Aussendose mit den darin aufzunehmenden Komponenten gefüllt und unter Druck gesetzt werden kann.

Im Anspruch 11 wird eine bevorzugte Verwendung der Aerosoldosenanordnung beansprucht.

Eine weitere Aufgabe der Erfindung besteht darin, eine mittels einer nach einem der Ansprüche 1 bis 10 ausgebildeten Aerosoldosenanordnung erzeugte Schaumbarriere vorzuschlagen, welche sich zum langzeitstabilen Abdichten von Rohren mit Innendurchmessern von 100 Millimetern und mehr eignet, wobei die Schaumbarriere Drücken von zumindest 0,1 bar standhalten soll.

Diese Aufgabe wir mit einer Schaumbarriere gelöst, welche die im Kennzeichen des Anspruchs 12 angegebenen Merkmale aufweist. Indem die Schaumbarriere eine Dicke aufweist, die zumindest dem 0,6-fachen des Rohrinnendurchmessers, insbesondere zumindest dem 0,8-fachen des Rohrinnendurchmessers entspricht, können Rohre zuverlässig hydraulisch abgedichtet werden und ausserdem hält die Schaumbarriere einem hydraulischen Druck von mindestens 0,1 bar stand.

Bevorzugte Weiterbildungen der Schaumbarriere sind in den abhängigen Ansprüchen 13 und 14 definiert.

So ist bei einer bevorzugten Weiterbildung der Schaumbarriere vorgesehen, dass die Schaumbarriere zur Hauptsache aus einer Mischung aus Urethan und Isocyanurat besteht. Diese Mischung hat sich als besonders geeignet für eine langzeitstabile Abdichtung herausgestellt.

Schliesslich ist bei einer besonders bevorzugten Weiterbildung vorgesehen, dass die Schaumbarriere insbesondere durch die Reaktion von Isocyanat und Polyol und die Trimerisierung von Isocyanat gebildet ist, wobei die Reaktion bis an die Innenwandung des abzudichtenden Rohrs durchgehend ist. Damit ist sichergestellt, dass die Schaumbarriere auch im Bereich der Rohrwandung sicher abdichtet.

Aus der nachfolgenden Detailbeschreibung und der Gesamtheit der Patentansprüche ergeben sich weitere vorteilhafte Ausführungsformen und Merkmalskombinationen der Erfindung.

Bei den zur Erläuterung eines Ausführungsbeispiels verwendeten Zeichnungen zeigt:
- Fig. 1: einen Schnitt durch eine Aerosoldose;
- Fig. 2: einen Schnitt durch ein mit einer Schaumbarriere versehenes Rohr.

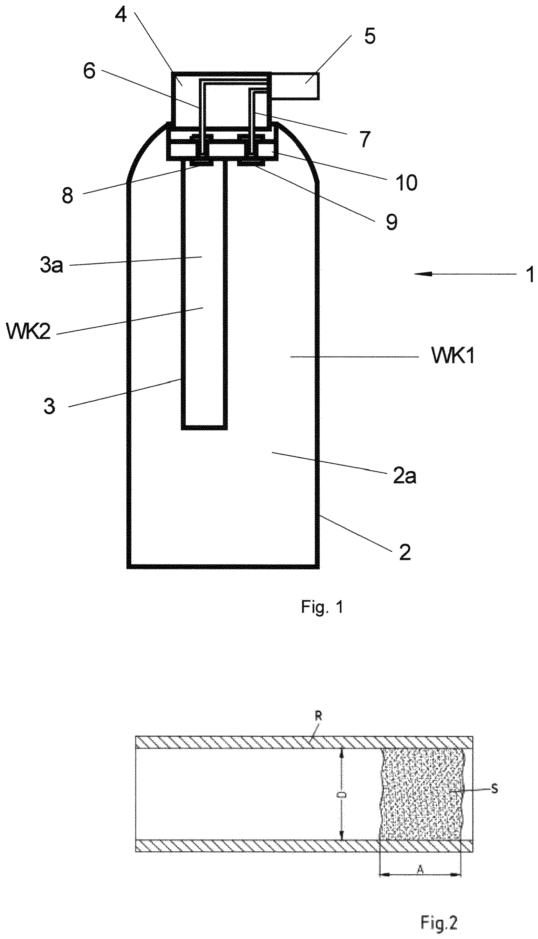

Die Fig. 1 zeigt die wesentlichen Bestandteile einer Aerosoldose in geschnittener und vereinfachter Darstellung. Die Aerosoldose umfasst im Wesentlichen eine druck- und formstabile Aussendose 2, einen Innenbehälter 3 und einen Sprühkopf 4. Im vorliegenden Beispiel ist der Innenbehälter 3 ebenfalls als form- und druckstabile Dose -Innendose- ausgebildet. Der Sprühkopf 4 ist über einen ersten Kanal 6 mit dem Innenraum 3a des Innenbehälters 3 und über einen zweiten Kanal 7 mit dem Innenraum 2a der Aussendose 2 verbunden. Der Sprühkopf ist zudem mit zwei die beiden genannten Kanäle 6, 7 verschliessenden Auslassventilen 8, 9 versehen, welche in bekannter Weise durch manuelles Drücken auf den Sprühkopf 4 gemeinsam geöffnet werden können. Die beiden Kanäle 6, 7 münden in ein am Sprühkopf 4 angeordnetes Austragsorgan 5, in welchem die aus dem Innenbehälter 3 bzw. der Aussendose 2 austreten Komponenten zusammengeführt und miteinander vermischt werden. Ggf. kann auf das Austragsorgan 5 ein mit Mischschikanen versehenes Mischorgan (nicht dargestellt) aufgesetzt werden oder das Austragsorgan 5 selber kann mit Mischschikanen (nicht dargestellt) versehen werden.

Die in der Aussendose 2 aufgenommenen Wirkstoffkomponenten sind gesamthaft mit WK1 bezeichnet, während die in der Innendose 3 aufgenommenen Wirkstoffkomponenten gesamthaft mit WK2 bezeichnet sind. Die Aerosoldose zusammen mit den darin aufgenommenen Wirkstoffkomponenten wird gesamthaft als Aerosoldosenanordnung 1 bezeichnet. Die dargestellte Aerosoldosenanordnung 1 hat den Vorteil, dass die in den beiden Innenräumen 2a, 3a aufgenommenen Wirkstoffkomponenten WK1, WK2 erst ausserhalb des jeweiligen Behälters - Aussendose 2 bzw. Innenbehälter 3- zusammengeführt werden und die chemischphysikalische Reaktion, mittels welcher der Schaum gebildet bzw. erzeugt wird, daher auch ausserhalb der beiden Behältnisse 2, 3 stattfindet. Dadurch eignet sich die Aerosoldose bzw. die Aerosoldosenanordnung 1 in bevorzugter Weise für den Mehrmalgebrauch.

Je nach Anwendung kann der Innenbehälter 3 entweder aus einem flexiblem Material oder als form- und druckstabile Dose ausgebildet sein. Die Ausbildung als form- und druckstabile Dose hat den Vorteil, dass diese bereits im uneingebauten Zustand mit den Wirkstoffkomponenten gefüllt und unter Druck gesetzt werden kann, beispielsweise mittels Flüssiggas. Zur Füllung des Innenbehälters 3 wird zunächst der Innenraum 3a mit Wirkstoff wie z.B. Härter gefüllt. Dann wird das Ventil aufgeschraubt und der Behälter durch den Ventilkörper 8 hindurch begast. Dann wird der Innenraum 2a mit dem anderen Wirkstoff befüllt, der Innenbehälter mit Ventil eingesteckt und verklinscht. Der Innenraum 2a wird durch den Ventilkörper 9 hindurch begast. Zum Schluss wird die ganze Dose geschüttelt.

Zur Bildung eines wasserdichten Schaums, mittels welchem eine Schaumbarriere erzeugt werden kann, sind beispielhaft folgende Komponenten in der jeweiligen Dose aufgenommen. Die nachfolgenden Werte sind jeweils in Gewichts-% angegeben und beziehen sich auf die Gesamtfüllung aus Außen- und Innendose.

### Aussendose:

- 30 bis 70 %: Diphenylmethan-4,4'-diisocyanat,
- 3 bis 15 %: Polyol mit einer OH-Zahl unter 300,
- 5 bis 30 %: Flüssiggas mit einer kritischen Temperatur von ≥ +70°C, vorzugsweise R152a und/oder DME
- 10 bis 20 %: Flammschutzmittel, vorzugsweise Tris(1-chlor-2-propyl)phosphat
- 0,1 bis 1 %: Katalysator für die Prepolymerreaktion, vorzugsweise 2,2'-dimorpholinodiethylether
- 0,1 bis 2 %: Schaumstabilisator, vorzugsweise Polyether-Polydimethylsiloxan-Copolymer

### Innenbehälter:

- 5 bis 30 %: Polyol mit einer OH-Zahl größer 300,
- 1 bis 10 %: Flüssiggas mit einer kritischen Temperatur von ≥ +70°C, vorzugsweise R152a und/oder DME
- 0,5 bis 3 %: Katalysator für Urethanreaktion
- 0,5 bis 3 %: Trimerisierungskatalysator
- 0,1 bis 3 %: Farbstoff

Durch Ausbringen und Vermischen der genannten Komponenten mittels der beschriebenen Aerosoldosenanordnung 1 wird ein Schaum erzeugt, der sich nach dem Aushärten eignet, um auch grössere Wasser-Rohre, d.h. Rohre mit einem Durchmesser von 100 Millimetern und mehr, auszufüllen und eine Schaumbarriere zu erzeugen, welche wasserdicht ist und einem Druck von mindestens 0,1 Bar standhält. Mit den angegebenen Wirkstoffkomponenten härtet der Schaum in ca. 5 bis 10 Minuten aus.

Vorzugsweise beträgt das Mischungsverhältnis 3 bis 7 Gewichtsteile WK1 zu einem Gewichtsteil WK2, wobei sich ein Mischungsverhältnis in der Grössenordnung von 5 zu 1 ganz besonders bewährt hat. Durch ein solches Mischungsverhältnis kann erstmals mit einem anderen Härtungsmechanismus gearbeitet werden. Wie nachfolgend angegeben erfolgt die Härtung des Prepolymers durch eine Kombination der bekannten Trimerisierung nach Formel 1 und einer Urethanreaktion nach Formel 2:

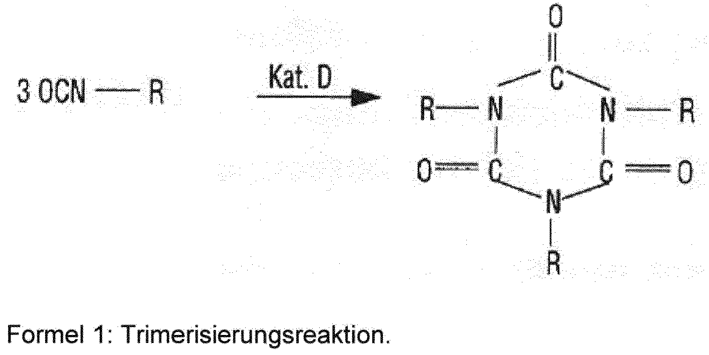

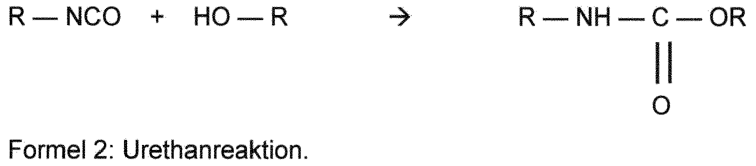

An Formel 1 sieht man, dass die Härtung katalytisch erfolgt, darum genügt es eine kleine Menge Katalysator aus Kammer 3a dem Prepolymer zuzudosieren und darum kann man mit einem Mischungsverhältnis in der Grössenordnung von 10 zu 1 arbeiten. Allerdings kann das genannte Mischungsverhältnis im Bereich zwischen ca. 8 zu 1 und 12 zu 1 variieren.

Für die Urethanreaktion nach Formel 2 muss man dem Prepolymer stöchiometrisch korrekte Mengen zugeben. Die Menge richtet sich u.a. nach der OH-Zahl des Polyols "R-OH" in Formel 2. Oft ist ein Mischungsverhältnis von 1 zu 1 nötig. Durch geschickte Formulierung kann man es auf 5 zu 1 reduzieren. Wenn man dem härtbaren Isocyanat das Flammschutzmittel und Polyol mit OH-Zahl kleiner 300 beimengt, vergrößert sich das Volumen erheblich und so kann man 5 zu 1 mischen.

Jedenfalls hat sich gezeigt, dass mit der beschriebenen Aerosoldosenanordnung 1 eine durchgehende Härtung des Prepolymers erreicht werden kann. Das Prepolymer härtet auch radial durchgehend bis an die ggf. kalte Rohrwand heran, so dass keine löcherige Grenzfläche wie bei den nach dem St.d.T. ausgebildeten Schäumen entsteht.

Die Figur 2 zeigt beispielhaft und in vereinfachter Darstellung einen Schnitt durch ein mit einer Schaumbarriere S versehenes Rohr R. Die Schaumbarriere S weist eine Dicke A auf, die zumindest dem 0,6-fachen des Rohrinnendurchmessers D, insbesondere zumindest dem 0,8-fachen des Rohrinnendurchmessers D entspricht. Vorzugsweise weist die Schaumbarriere S eine Dicke A auf, die zumindest dem Innendurchmesser D des Rohrs R entspricht. Die Schaumbarriere haftet entlang ihres Umfangs entweder durch Adhäsion oder mechanische Verzahnung an der Innenwand des Rohrs R.

Die mit der vorgängig beschriebenen Aerosoldosenanordnung in das Rohr R eingebrachte Schaumbarriere weist eine bis an die Rohrwand reichende Härtung auf, so dass die Schaumbarriere durchgehend gehärtet ist und auch an der ggf. kalten Rohrwand keine löcherige Grenzfläche entsteht. Somit bildet die Schaumbarriere eine hydraulisch durchgehend dichte bzw. wasserdichte Abdichtung des Rohrs. Versuche haben ergeben, dass die Schaumbarriere bei einer Dicke A, die in etwa dem Rohrinnendurchmesser D entspricht, einem hydraulischen Druck von mindestens 0,1 bar standhält. Die genannten Verhältnisse treffen natürlich nicht für alle Rohrgrössen zu, sondernd gelten insbesondere für Rohre mit einem Innendurchmesser zwischen ca. 100mm und 500 mm. Bei kleineren Rohren kann es ggf. genügen, eine Dicke A zu wählen, die im Bereich zwischen dem 0,6-fachen und dem 0,9-fachen des Innendurchmessers D des Rohrs R liegt.

## Patentansprüche

1. Aerosoldosenanordnung (1) mit einer Aussendose (2), einem Innenbehälter (3) und einem mit einem Austragsorgan (5) versehenen Sprühkopf (4), der je ein mit dem Inneren (2a) der Aussendose (2) und ein mit dem Inneren (3a) des Innenbehälters (3) in Verbindung stehendes Auslassventil (8, 9) aufweist, wobei in der Aussendose (2) zumindest eine erste Komponente zusammen mit zumindest einem Treibgas und in dem Innenbehälter (3) zumindest eine weitere Komponente zusammen mit zumindest einem Treibgas aufgenommen ist, und wobei die Auslassventile (8, 9) durch Druck auf den Sprühkopf (4) gemeinsam betätigbar sind, derart, dass der Inhalt der Aussendose (2) und der Inhalt des Innenbehälter (3) gemeinsam in das Austragsorgan (5) eintreten können, **dadurch gekennzeichnet, dass** zur Bildung des Schaums in der Aussendose (2) zumindest jeweils 30 bis 70 Gewichts-% (Gew.-%) Isocyanat, insbesondere Diphenylmethan-4,4'-diisocyanat, 5 bis 30 Gew.-% Flüssiggas mit einer kritischen Temperatur von ≥ +70°C, *3 bis 15 Gew.-% Polyol mit einer OH-Zahl unter 300 sowie 10 bis 20 Gew.-% Flammschutzmittel aufgenommen sind,* und in dem Innenbehälter (3) zumindest jeweils 5 bis 30 Gew.-% Polyol mit einer OH-Zahl größer 300, 1 bis 10 Gew.-% Flüssiggas mit einer kritischen Temperatur von ≥ +70°C *sowie zusätzlich 0,5 bis 3 Gew.-% Katalysator für Urethanreaktion sowie 0,5 bis 3 Gew.-% Trimerisierungskatalysator* aufgenommen sind.

2. Aerosoldosenanordnung (1) nach Anspruch1, **dadurch gekennzeichnet, dass** als Flammschutzmittel Tris(1-chlor-2-propyl)phosphat in der Aussendose (2) aufgenommen ist.

3. Aerosoldosenanordnung (1) nach einem der vorhergehenden Ansprüche, **dadurch gekennzeichnet, dass** in der Aussendose (2) zusätzlich 0,1 bis 1 Gew.-% Katalysator für die Prepolymerreaktion und in dem Innenbehälter (3) zusätzlich 0,1 bis 3 Gew.-% Farbstoff aufgenommen sind.

4. Aerosoldosenanordnung (1) nach Anspruch 3, **dadurch gekennzeichnet, dass** als Katalysator für das Prepolymer 2,2'-dimorpholinodiethylether in der Aussendose (2) aufgenommen ist.

5. Aerosoldosenanordnung (1) nach einem der vorhergehenden Ansprüche, **dadurch gekennzeichnet, dass** als Flüssiggas in der Aussendose (2) 5 bis 30 Gew.% R152a und/oder DME und/oder Propan/Butan-Gemische aufgenommen ist/sind.

6. Aerosoldosenanordnung (1) nach einem der vorhergehenden Ansprüche, **dadurch gekennzeichnet, dass** als Schaumstabilisator in der Aussendose (2) Polyether-Polydimethylsiloxan-Copolymer aufgenommen ist.

7. Aerosoldosenanordnung (1) nach einem der vorhergehenden Ansprüche, **dadurch gekennzeichnet, dass** als Flüssiggas in dem Innenbehälter (3) 1 bis 10 Gew.% R152a und/oder DME und/oder Propan-Butan-Gemische aufgenommen ist/sind.

8. Aerosoldosenanordnung (1) nach einem der vorhergehenden Ansprüche, **dadurch gekennzeichnet, dass** in dem Innenbehälter (3) zumindest 15 Gew.-Anteile Polyol mit einer OH-Zahl größer 300 pro 100 Gew.-Anteile Isocyanat oder Diphenylmethan-4,4'-diisocyanat aufgenommen ist.

9. Aerosoldosenanordnung (1) nach einem der vorhergehenden Ansprüche, **dadurch gekennzeichnet, dass** das nutzbare Volumen des Innenbehälters (3) zumindest 20% des nutzbaren Volumens der Aussendose (2) beträgt.

10. Aerosoldosenanordnung (1) nach einem der vorhergehenden Ansprüche, **dadurch gekennzeichnet, dass** der Innenbehälter (3) form- und druckstabil ausgebildet ist.

11. Verwendung einer Aerosoldosenanordnung (1) nach einem der vorhergehenden Ansprüche zum Ausschäumen von Rohren zur Erzeugung einer hydraulischen Abdichtung.

12. Schaumbarriere (S) in einem Rohr (R) zur hydraulischen Abdichtung desselben, erzeugt mittels einer Aerosoldosenanordnung (1) nach einem der Ansprüche 1 bis 11, **dadurch gekennzeichnet, dass** die Schaumbarriere (S) eine Dicke (A) aufweist, die zumindest dem 0,6-fachen des Innendurchmessers (D) des abzudichtenden Rohrs (R), insbesondere zumindest dem 0,8-fachen des Innendurchmessers (D) des abzudichtenden Rohrs (R) entspricht.

13. Schaumbarriere (S) nach Anspruch 12, **dadurch gekennzeichnet, dass** die Schaumbarriere (S) zur Hauptsache aus einer Mischung aus Urethan und Isocyanurat besteht.

14. Schaumbarriere (S) nach Anspruch 12 oder 13, **dadurch gekennzeichnet, dass** die Schaumbarriere (S) insbesondere durch die Reaktion von Isocyanat und Polyol und die Trimerisierung von Isocyanat gebildet ist, wobei die Reaktion bis an die Innenwandung des abzudichtenden Rohrs durchgehend ausgebildet ist.

## Claims

1. An aerosol can configuration (1), with an outer can (2), an inner container (3) and a spray head (4) provided with a discharge element (5), the spray head having an outlet valve (8, 9) connected to the interior (2a) of the outer can (2) and an outlet valve (8, 9) connected to the interior (3a) of the inner container (3), wherein at least one first component is contained together with at least one propellant gas in the outer can (2), and at least one further component together with at least one propellant gas is contained in the inner container (3), and wherein the outlet valves (8, 9) are configured to be actuated jointly by pressing on the spray head (4) such that the contents of the outer can (2) and the contents of the inner container (3) can jointly enter the discharge element, **characterised in that**, to form the foam, the outer can (2) contains at least 30 to 70 wt.-% isocyanate, in particular diphenylmethane 4,4'-diisocyanate, and 5 to 30% by weight liquid gas at a critical temperature of ≥+70°C, *3 to 15 wt.-% polyol with an OH number of less than 300 and 10 to 20 wt.-% flame retardant is contained in the outer can,* and at least 5 to 30 wt.-% polyol with an OH number of more than 300, 1 to 10 wt.-% liquid gas with a critical temperature of ≥+70°C, *and 0.5 to 3 wt.-% catalyst for the urethane reaction and 0.5 to 3 wt.-% trimerisation catalyst* are additionally contained in the inner container (3).

2. The aerosol can configuration (1) according to claim 1, **characterised in that** tris(1-chloro-2-propyl) phosphate is additionally contained as a flame retardant in the outer can (2).

3. The aerosol can configuration (1) according to one of the preceding claims, **characterised in that** 0.1 to 1 wt.-% catalyst for the prepolymer reaction is additionally contained in the outer can (2), and 0.1 to 3 wt.-% colouring agent is additionally contained in the inner container (3).

4. The aerosol can configuration (1) according to claim 3, **characterised in that** 2,2' dimorpholinodiethyl ether as a catalyst for the prepolymer is contained in the outer can (2).

5. The aerosol can configuration (1) according to one of the preceding claims, **characterised in that** 5 to 30 wt.-% R152a and/or DME and/or propane-butane mixtures is/are contained as liquid gas in the outer can (2).

6. The aerosol can configuration (1) according to one of the preceding claims, **characterised in that** the polyether-polydimethylsiloxane copolymer is contained as foam stabiliser in the outer can (2).

7. The aerosol can configuration (1) according to one of the preceding claims, **characterised in that** 1 to 10 wt.-% R152a and/or DME and/or propane-butane mixtures is/are contained as liquid gas in the inner container (3).

8. The aerosol can configuration (1) according to one of the preceding claims, **characterised in that** at least 15 parts by weight polyol with an OH number of more than 300 per 100 parts by weight isocyanate or diphenylmethane 4,4'-diisocyanate are contained in the inner container (3).

9. The aerosol can configuration (1) according to one of the preceding claims, **characterised in that** the usable volume of the inner container (3) is at least 20% of the usable volume of the outer can (2).

10. The aerosol can configuration (1) according to one of the preceding claims, **characterised in that** the inner container (3) is configured to be dimensionally stable and pressure stable.

11. A use of the aerosol can configuration (1) according to one of the preceding claims for filling pipes with foam to create a hydraulic seal.

12. A foam barrier (S) in a pipe (R) for hydraulic sealing of same, produced by means of an aerosol can configuration (1) according to one of claims 1 to 11, **characterised in that** the foam barrier (S) has a thickness (A) which corresponds to at least 0.6 times the inside diameter (D) of the pipe (R) to be sealed, in particular at least 0.8 times the inside diameter (D) of the pipe (R) to be sealed.

13. The foam barrier (S) according to claim 12, **characterised in that** the foam barrier (S) consists mainly of a mixture of urethane and isocyanurate.

14. The foam barrier (S) according to claim 12 or 13, **characterised in that** the foam barrier (S) is formed in particular by the reaction of isocyanate and polyol and by trimerisation of isocyanate, wherein the reaction is designed to be continuous up to the inside wall of the pipe to be sealed.

## Revendications

1. Ensemble aérosol (1) avec une boîte externe (2), une boîte interne (3) et une tête de pulvérisation (4) munie d'un organe de distribution (5), tête de pulvérisation (4) qui présente respectivement une valve de sortie (8, 9) communiquant avec l'intérieur (2a) de la boîte externe (2) et avec l'intérieur (3a) de la boîte interne (3), au moins un premier composant étant reçu avec au moins un gaz propulseur dans la boîte externe (2) et au moins un autre composant étant reçu avec au moins un gaz propulseur dans la boîte interne (3), et les valves de sortie (8, 9) pouvant être actionnées conjointement par pression de la tête de pulvérisation (4), de sorte que le contenu de la boîte externe (2) et le contenu de la boîte interne (3) peuvent entrer conjointement dans l'organe de distribution (5), **caractérisé en ce que** pour la formation de la mousse au moins respectivement 30 à 70 % en poids d'isocyanate, en particulier de 4,4'-diisocyanate de diphénylméthane, 5 à 30 % en poids de gaz liquéfié à une température critique de ≥ +70°C, *3 à 15% en poids de polyol avec un indice d'OH inférieur à 300, ainsi que 10 à 20% en poids d'un retardateur de flamme sont reçus dans la boîte externe (2),* et respectivement au moins 5 à 30% en poids de polyol avec un indice d'OH supérieur à 300, 1 à 10% en poids de gaz liquéfié à une température critique de ≥ +70°C, ainsi qu'en plus 0,5 à 3% en poids d'un catalyseur de réaction uréthanique, ainsi que 0,5 à 3% en poids d'un catalyseur de trimérisation sont reçus dans la boîte interne (3).

2. Ensemble aérosol (1) suivant la revendication 1, **caractérisé en ce que** comme retardateur de flamme du tris(1-chloro-2-propyl)phosphate est reçu dans la boîte externe (2).

3. Ensemble aérosol (1) suivant une des revendications précédentes, **caractérisé en ce que** 0,1 à 1% en poids d'un catalyseur de réaction fournissant le prépolymère est reçu en plus dans la boîte externe (2) et 0,1 à 3% en poids d'un colorant sont reçu en plus dans la boîte interne (3).

4. Ensemble aérosol (1) suivant la revendication 3, **caractérisé en ce que** comme catalyseur pour le prépolymère du 2,2'-dimorpholinodiéthyléther est reçu dans la boîte externe (2).

5. Ensemble aérosol (1) suivant une des revendications précédentes, **caractérisé en ce que** comme gaz liquéfié 5 à 30% en poids de R152a et/ou de DME et/ou de mélanges de propane-butane sont reçus dans la boîte externe (2).

6. Ensemble aérosol (1) suivant une des revendications précédentes, **caractérisé en ce que** comme stabilisateur de mousse du copolymère de polydiméthlsiloxane-polyéther est reçu dans la boîte externe (2).

7. Ensemble aérosol (1) suivant une des revendications précédentes, **caractérisé en ce que** comme gaz liquéfié 1 à 10% en poids de R152a et/ou de DME et/ou de mélanges de propane-butane sont reçus dans la boîte interne (3).

8. Ensemble aérosol (1) suivant une des revendications précédentes, **caractérisé en ce qu'**au moins 15 parties en poids de polyol avec un indice d'OH supérieur à 300 par 100 parties en poids d'isocyanate ou de 4,4'-diisocyanate de diphénylméthane sont reçues dans la boîte interne (3).

9. Ensemble aérosol (1) suivant une des revendications précédentes, **caractérisé en ce que** le volume utile de la boîte interne (3) s'élève à au moins 20% du volume utile de la boîte externe (2).

10. Ensemble aérosol (1) suivant une des revendications précédentes, **caractérisé en ce que** la boîte interne (3) est conçu de sorte à présenter une stabilité de pression et dimensionnelle.

11. Ensemble aérosol (1) suivant une des revendications précédentes destiné au moussage de tuyaux pour réaliser une étanchéification hydraulique.

12. Barrière de mousse (S) dans un tuyau (R) pour l'étanchéification hydraulique de celui-ci, réalisée au moyen d'un ensemble aérosol (1) suivant une des revendications 1 à 11 **caractérisée en ce que** la barrière de mousse (S) présente une épaisseur (A) qui correspond au moins à 0,6 fois le diamètre interne (D) du tuyau (R) à étanchéifier, en particulier au moins à 0,8 fois le diamètre interne (D) du tuyau (R) à étanchéifier.

13. Barrière de mousse (S) suivant la revendication 12, **caractérisée en ce que** la barrière de mousse (S) est constituée principalement d'un mélange d'uréthane et d'isocyanurate.

14. Barrière de mousse (S) suivant la revendication 12 ou 13, **caractérisée en ce que** la barrière de mousse (S) est formée en particulier par la réaction d'isocyanate et de polyol et la trimérisation d'isocyanate, la réaction étant de forme continue jusqu'à la paroi interne du tuyau à étanchéifier.
